(19) **Europäisches Patentamt / European Patent Office / Office européen des brevets**

(11) **EP 4 205 318 B1**

(12) **EUROPEAN PATENT SPECIFICATION**

(45) Date of publication and mention
of the grant of the patent:
**21.05.2025 Bulletin 2025/21**

(21) Application number: **20838077.4**

(22) Date of filing: **22.12.2020**

(51) International Patent Classification (IPC):
*H04W 4/029* (2018.01)   *H04L 1/00* (2006.01)
*H04B 7/06* (2006.01)   *G06N 3/08* (2023.01)

(52) Cooperative Patent Classification (CPC):
**G06N 3/08; G01S 5/0278; G06N 3/045;**
**H04L 1/0026; H04B 7/0626; H04W 4/029**

(86) International application number:
**PCT/EP2020/087650**

(87) International publication number:
**WO 2022/135697 (30.06.2022 Gazette 2022/26)**

(54) **DEVICES AND METHODS FOR LOCALIZATION**

VORRICHTUNGEN UND VERFAHREN ZUR LOKALISIERUNG

DISPOSITIFS ET PROCÉDÉS DE LOCALISATION

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**05.07.2023 Bulletin 2023/27**

(73) Proprietor: **Huawei Technologies Co., Ltd.**
**Shenzhen, Guangdong 518129 (CN)**

(72) Inventors:
• **ARVANITAKIS, George**
  **80992 Munich (DE)**
• **YANG, Ganghua**
  **80992 Munich (DE)**
• **LI, Yanchun**
  **80992 Munich (DE)**
• **CHU, Yun Yaw**
  **80992 Munich (DE)**

(74) Representative: **Roth, Sebastian**
**Mitscherlich PartmbB**
**Patent- und Rechtsanwälte**
**Karlstraße 7**
**80333 München (DE)**

(56) References cited:
**EP-A1- 3 108 706**     **CN-A- 109 640 269**
**CN-A- 109 670 644**

• **WU GUAN-SIAN ET AL: "A Deep Neural Network-Based Indoor Positioning Method using Channel State Information", 2018 INTERNATIONAL CONFERENCE ON COMPUTING, NETWORKING AND COMMUNICATIONS (ICNC), IEEE, 5 March 2018 (2018-03-05), pages 290 - 294, XP033361045, DOI: 10.1109/ICCNC.2018.8390298**

**Description**

TECHNICAL FIELD

The present disclosure relates to devices and methods for performing localization in a wireless network, in particular, a computing device and a network device for performing channel state information (CSI)-based localization.

BACKGROUND

Localization is becoming more and more essential, in particular, for location-based services. Global navigation satellite systems (GNSSs), such as Global Positioning System (GPS), represent the most common positioning technology. However, the GNSSs have limitations, because of the requirement of an unobstructed line of sight to four or more satellites. Therefore, the accuracy and availability of the GNSSs may deteriorate in several important application scenarios, such as indoor environments and urban canyons.

In this regard, a so-called fingerprint-based localization may be used to determine a location of a terminal device in a wireless network. A radio environment of a particular wireless network has its characteristic, known as a "fingerprint". The fingerprint-based localization can determine the location of the terminal device by analysing characteristic properties of one or more radio signals of the terminal device in comparison with premeasured characteristic properties. CSI is one fingerprint. In particular, CSI-based localization is more and more adopted because of its high accuracy. Since an enormous amount of measurements or samples are essential to build a database to facilitate the CSI-based localization, artificial intelligence approaches, such as using neural networks, can be used to facilitate the CSI-based localization.

The CSI-based localization based on Artificial Intelligence (AI) approaches (also referred to as learning-based CSI fingerprinting localization) typically comprises two phases: an offline phase (also referred to as a training phase) and an online phase (also referred to as a deployment phase). In the offline phase, a neural network model may be trained based on labelled CSI data as training samples, in order to obtain a trained neural network model that has learned features from the labelled CSI data. In the online phase, the trained neural network may be deployed and used to analyse captured CSI, to extract features of the captured CSI, and to compare the extract features of the captured CSI, and to compare the extracted features with features that have been learned during the training phase, in order to obtain a matched location.

EP 3108706A1 discloses a solution for performing wireless-based localization using a zonal framework. An area (i.e., surface or space) may be partitioned into multiple zones, and one or more signal propagation models for one or more wireless access points (APs) may be generated for each zone. The result is a set of zonal signal propagation models that allow for improved model fitness on a per-zone basis. A process includes receiving a location query associated with a wireless communication device, selecting a target zone among multiple available zones of an area, and estimating a location of the wireless communication device based at least in part on one of a signal propagation model associated with the target zone or a fingerprint-based localization. The signal propagation model associated with the target zone may be generated based on training samples observed exclusively within the target zone.

WU GUAN-SIAN ET AL: "A Deep Neural Network-Based Indoor Positioning Method using Channel State Information", 5 March 2018, discloses a deep neural network (DNN)-based indoor positioning FP system using CSI, which is termed DNNFi. The proposed DNNFi, which maintains a single DNN instead of multiple deep autoencoders at different reference points, allows a faster computation for the online inference and a lower memory usage for the weights/biases. A stack of autoencoders is utilized to pre-train the weights layer-by-layer. The softmax function is utilized to decide the probabilities of the receiver position being on these reference points, which can be used to estimate the receiver position. Experimental results are presented to confirm that DNNFi can effectively reduce location error compared with the conventional CSI positioning FP approaches.

CN 109 640 269 A discloses a fingerprint location method based on CSI and a time domain fusion algorithm. In an offline phase, two-step training is carried out on a combined network according to amplitude information of the CSI obtained by each reference point, wherein the combined network is composed of a slot fingerprint-based location network (SLN) and a time domain position fusion network (FN); and in an online testing phase, real-time collected CSI is input into a trained network, and predicted positions are obtained. According to the method, the CSI of an LTE network is taken as a fingerprint with relatively fine granularity; time fluctuation and correlation of the CSI fingerprint are captured through utilization of a two-phase processing time domain fusion algorithm based on deep learning. The time correlation of the CSI fingerprint is taken into consideration in a location system.

SUMMARY

A conventional learning-based CSI fingerprinting localization typically needs substantially expensive measurement campaigns, in order to achieve a high accuracy, for example, sub-decimeter accuracy. Moreover, the cost in labor, data storage, and processing resources grows in proportion to the area size in which the localization is to be performed, and the sampling density of the measurement campaigns.

Furthermore, as the diversity of a database grows, it is unavoidable to design and deploy more complex neural networks that are able to discriminate satisfyingly a growing number of features of CSI. However, the complexity of such neural networks increases the training time and memory footprint required for training and deploying these neural networks.

Moreover, the conventional learning-based CSI fingerprinting localization suffers from a lack of versatility when the environment in which the localization is performed changes, which may include changes in a coverage area and an extension of the coverage area. Extending the coverage area after deployment, or changes of even a small part in the covered area, would affect the existing wireless channels and thus CSI. As a result, the deployed neural networks may no longer be suitable for performing the CSI-based localization accurately after the change.

One solution would be to perform incremental learning while avoiding catastrophic forgetting. Catastrophic forgetting (also known as catastrophic interference) is a tendency of neural networks to completely and abruptly forget previously learned information while learning new information. For overcoming such catastrophic forgetting, a number of incremental learning approaches (also referred to as continual learning) have been proposed to mitigate catastrophic forgetting, such as "learning without forgetting", progressive neural networks, elastic weight consolidation etc. By using these incremental learning approaches, the existing neural networks can be re-trained by using newly acquired training data without introducing negative consequences. However, these continual learning approaches are typically comprehensive, time consuming, and require delicate fine-tuning. Therefore, these continual learning approaches are not practical for actual deployment. Furthermore, previously trained neural networks may be no longer suitable for performing the localization even for areas that are not affected by changes.

Another solution would be to rebuild an entirely new neural network for the new environment. However, this would require necessary updates to the databases. Further, in this way, previously trained neural networks may no longer be suitable for performing the localization accurately, and therefore may have to be discarded, which would be a waste of computational resources. Moreover, access to the databases for performing necessary updates may not be possible after a localization service has been deployed, so that training samples need to be collected from scratch.

In view of the above-mentioned problems and disadvantages, an objective of the present disclosure is to provide a CSI-based localization approach that is resilient to environment changes and avoids the drawbacks of the above-mentioned solutions.

This and other objectives of the present disclosure are achieved by the embodiments provided in the enclosed independent claims. Advantageous implementations of these embodiments are further defined in the dependent claims.

An idea described in the present disclosure with respect to the embodiments is to apply a space division of a coverage area of a wireless network in the training phase. In other words, the present disclosure proposes to divide the coverage area into blocks. A smaller coverage area may consist of one or more blocks. Therefore, the coverage area may be divided into several smaller coverage areas. Then, instead of employing neural networks for the entire coverage area, one or more neural networks may be trained for each smaller coverage area to reduce the complexity and the memory footprint. Another idea described in the present disclosure is, in the online phase, to activate multiple neural networks for one CSI input and to determine a final estimation based on outputs of the multiple neural networks.

A first aspect of the present disclosure provides a computing device for supporting a network device in estimating a location of a terminal device in a wireless network. The computing device is configured to obtain one or more CSI datasets of a first coverage area of the network device, wherein the one or more CSI datasets are labelled with location information. The computing device is further configured to determine a set of sub-areas in the first coverage area and to partition the one or more labelled CSI datasets based on the determined sub-areas, in order to obtain two or more CSI data partitions. Each CSI data partition corresponds to a second coverage area, wherein each second coverage area comprises one or more adjoining sub-areas of the set of sub-areas (211). The computing device is further configured to train one or more neural network models for each second coverage area using the corresponding CSI data partition to obtain two or more trained neural network models.

In particular, the one or more CSI datasets may be built based on channel measurement results of one or more sampling devices. Furthermore, location information for labelling the one or more CSI datasets may be obtained by a positioning module. The positioning module may be a component in the one or more sampling devices, or may be an external module attached to the one or more sampling devices.

Further, each CSI dataset may comprise two or more pieces of CSI. Each piece of CSI may be used to indicate one or more channel response properties of a communication link between a terminal device and a network device. The one or more channel response properties may comprise an effect of at least one of scattering, fading, delay, and power decay with distance.

Further, the channel measurements may be performed at different time slots, so that channel response properties varying with time can be reflected in the one or more CSI datasets.

In particular, the CSI may comprise one or more of the following parameters:

- a signal magnitude;
- an angle of arrival;
- a time of flight;
- a channel quality indicator;
- a precoding matrix index;
- a rank indicator;
- a central frequency;
- a frequency interval of adjacent subcarriers.

Optionally, the CSI may be labelled with a time stamp.

Further, the one or more CSI datasets may be obtained by the computing device from the one or more sampling devices or may be obtained from one or more access points, or may be obtained from a storage device that stores the one or more CSI datasets.

Moreover, for partitioning the one or more labelled CSI datasets based on the set of sub-areas, the computing device may be configured to group CSI belonging to a same sub-area from the one or more labelled CSI datasets. Then, one or more adjoining sub-areas may form a second coverage area. That is, each sub-area may be used as a basic unit for forming the second coverage area.

In this way, the coverage area of the network device can be divided into at least two second coverage areas, which are smaller than the coverage area of the network device. Therefore, the computational complexity for training the neural network models can be reduced for each of the second coverage areas.

Moreover, in case of one or more environment changes in one of the second coverage areas, other second coverages areas may not be affected and the respective neural network models can be used without update. Further, incremental installation of new hardware may be achieved. In particular, when the coverage area needs to be extended, new neural network models corresponding to the newly added area may be used together with the existing trained neural network models. No training over the extended coverage area as a whole is needed.

In an implementation form of the first aspect, the computing device may be further configured to provide the two or more trained neural network models to the network device. Alternatively or additionally, the network device may comprise the computing device. That is, the computing device may be an integrated unit of the network device. In this case, the two or more trained neural network may be provided by the computing device to another unit of the network device for performing the deployment phase.

In a further implementation form of the first aspect, adjacent second coverage areas may share an overlapping region, and the computing device may be configured to train more than one neural network model for the overlapping region.

In this way, the accuracy of the localization may be further increased, because an optimal neural network model may be selected in the deployment phase.

Notably, the adjacent second coverage areas may be understood to be second coverage areas that are located next to each other.

In a further implementation form of the first aspect, the overlapping region comprises a part of one sub-area, or one complete sub-area, or more than one sub-area.

In a further implementation form of the first aspect, the computing device may be further configured to determine one or more overlapping factors, in which each overlapping factor is used to indicate a proportion of a respective overlapped sub-area corresponding to a respective overlapping region. Then, the computing device may be configured to partition the one or more labelled CSI datasets based further on the one or more overlapping factors.

In a further implementation form of the first aspect, for determining the set of sub-areas in the first coverage area, the computing device may be configured to determine at least one of a size of each sub-area, a shape of each sub-area, and a quantity of sub-areas based on computational resources of the computing device.

In particular, the computational resources of the computing device may comprise one or more of a memory resource, a storage resource, a power resource, and a processor resource.

Further, the one or more estimation requirements may comprise at least one of the following: an accuracy of the estimation, an availability of the estimation, and an authenticity of the estimation.

In a further implementation form of the first aspect, the computing device may be further configured to label each trained neural network model according to the corresponding second coverage area.

Optionally, for labelling each trained neural network model, the computing device may use a naming convention or an identity to identify the corresponding second coverage area.

According to the above implementation forms of the first aspect, the coverage area of the network device can be divided into two or more second coverage areas, such that the computational complexity of training neural network models for each second coverage areas can be reduced. Furthermore, the trained neural network models of the two or more second coverage areas are resilient to environment changes.

A second aspect of the present disclosure provides a network device for estimating a location of a terminal device in a wireless network. The network device is configured to receive CSI associated with the terminal device. The network device is further configured to obtain two or more neural network models, and to input the CSI to each of the two or more neural network models. As outputs of the two or more neural network models, the network device is configured to obtain a set of estimations of the location of the terminal device. The network device is further configured to determine a final estimation of the location of the terminal device based on the obtained set of estimations.

Notably, the network device may receive the CSI associated with the terminal device directly from the terminal device. Alternatively, the network device may receive the CSI associated with the terminal device from an access point that communicates with the terminal device.

Further, the CSI may be obtained by performing a measurement of one or more radio links between the terminal device and an access point. During the measurement, a reference signal may be transmitted between the terminal device and the access point. Further, the measurement may be performed at different time slots.

Further, the CSI may comprise one or more of the following parameters:

- a signal magnitude;
- an angle of arrival;
- time of flight;
- a channel quality indicator;
- a precoding matrix index;
- a rank indicator;
- a central frequency;
- a frequency interval of adjacent subcarriers.

Further, the CSI may be labelled with at least one of an identity of the terminal device and a time stamp.

Optionally, multiple-input and multiple-output (MIMO) technology may be used between the terminal device and the network device. That is, the terminal device and the network device may both comprise multiple antennas. Therefore, the CSI may also be used to indicate one or more channel response properties of multiple antenna pairs, wherein one antenna pair corresponds to a transmitting antenna of a sending end and a receiving antenna of a receiving end.

As a result, the CSI may comprise one or more measurement results between two or more antenna pairs. In this way, the accuracy of the localization may be further improved.

In an implementation form of the second aspect, for obtaining the two or more neural network models, the network device may be configured to receive the two or more neural network models from a computing device.

Further, the network device may be configured to store a set of neural network models covering a coverage area of the network device on a local storage unit. In this case, the network device may be configured to select the two or more neural network models from the set of neural network models.

Alternatively or additionally, the network device may comprise the computing device. That is, the computing device may be an integrated unit of the network device.

In a further implementation form of the second aspect, for obtaining the two or more neural network models, the network device is configured to:

determine a signal strength based on the CSI;
estimate a coverage area of the CSI based on the signal strength; and
determine the two or more neural network models based on the estimated coverage area.

In this way, a consumption of computational resources may be reduced by obtaining the estimated coverage area in the online phase. This is due to the fact that the two or more neural network models may be determined based on the estimated coverage area and irrelevant neural network models that are distinct to the estimated coverage area are not involved in the localization.

In a further implementation form of the second aspect, before determining the final estimation of the location of the terminal device, the network device may be configured to identify one or more isolated estimations that are isolated in the first coverage area; and to discard the one or more isolated estimations from the obtained set of estimations.

In this way, the accuracy of the localization may be further improved.

In a further implementation form of the second aspect, for determining the final estimation of the location of the terminal device, the network device may be configured to:

select a voting rule;
apply the voting rule to select a cluster of estimations that has a highest ranking; and
compute a mean value of estimations in the cluster as the final estimation of the location of the terminal device.

In particular, for applying the voting rule, the network device may be configured to:

determine a trusted range;
determining a group of estimations that has the largest number of estimations falling within the trusted ranges among the cluster of estimations;
calculate a mean value of all estimations in the group of estimations as the final estimation.

Optionally, the network device may determine a minimum required quantity of the group of estimations. In this case, if the number of estimations in the group estimations is less than the minimum required quantity, subsequent steps may be skipped and the trusted range may be updated. Then, the voting rule may be applied again based on the updated trusted range.

A third aspect of the present disclosure provides a system for estimating a location of a terminal device in a wireless network. The system comprises at least one computing device according to the first aspect or any of its implementation forms, and at least one network device according to the second aspect or any of its implementation forms.

In an implementation form of the third aspect, the system may comprise at least two network devices. For obtaining the two or more neural network models, the system may be configured to:

perform a gross estimation based on at least one of signal information and geometrical information of the CSI of the terminal device received by the at least two network devices to obtain an area of interest; and
determine an optimal network device from the at least two network devices by comparing the area of interest with a first coverage area of each network device, wherein the optimal network device is configured to obtain the two or more neural network models based on the area of interest.

A fourth aspect of the present disclosure provides a method for supporting a network device in estimating a location of a terminal device in a wireless network. The method comprises the following steps:

obtaining, by a computing device, one or more channel state information, CSI, datasets of a first coverage area of the network device, wherein the one or more CSI datasets are labelled with location information;
determining, by the computing device, a set of sub-areas in the first coverage area;
partitioning, by the computing device, the one or more labelled CSI datasets based on the determined set of sub-areas to obtain two or more CSI data partitions, each CSI data partition corresponding to a second coverage area, wherein each second coverage area comprises one or more adjoining sub-areas of the set of sub-areas (211); and
training, by the computing device, one or more neural network models for each second coverage area using the corresponding CSI data partition to obtain two or more trained neural network models.

In an implementation form of the third aspect, the method may further comprise providing, by the computing device, the two or more trained neural network models to the network device. Alternatively or additionally, the network device may comprise the computing device. That is, the computing device may be an integrated unit in the network device. In this case, the two or more trained neural network may be provided by the computing device to another unit of the network device for performing the deployment phase.

In a further implementation form of the third aspect, adjacent second coverage areas may share an overlapping region, and the computing device may be configured to train more than one neural network model for the overlapping region.

In a further implementation form of the third aspect, the overlapping region comprises a part of one sub-area, or one complete sub-area, or more than one sub-area.

In a further implementation form of the first aspect, the method may further comprise:

determining, by the computing device, one or more overlapping factors, in which each overlapping factor is used to indicate a proportion of a respective overlapped sub-area corresponding to a respective overlapping region; and
partitioning, by the computing device, the one or more labelled CSI datasets based further on the one or more overlapping factors.

In a further implementation form of the third aspect, the determining the set of sub-areas in the first coverage area may comprise determining at least one of a quantity of the set of sub-areas and a size of each sub-area based on computational resources of the computing device, and one or more estimation requirements.

In a further implementation form of the third aspect, the method may further comprise labelling each trained neural network model according to the corresponding second coverage area.

A fifth aspect of the present disclosure provides a method for estimating a location of a terminal device in a wireless network. The method comprises the following steps:

> receiving, by a network device, channel state information, CSI, from the terminal device;
> obtaining, by the network device, two or more neural network models;
> inputting, by the network device, the CSI to each of the two or more neural network models;
> obtaining, by the network device, a set of estimations of the location of the terminal device as outputs of the two or more neural network models; and
> determining, by the network device, a final estimation of the location of the terminal device based on the obtained set of estimations.

In an implementation form of the fifth aspect, the obtaining the two or more neural network models may comprise receiving, by the network device, the two or more neural network models from a computing device.

Alternatively or additionally, the network device may comprise the computing device. That is, the computing device may be an integrated unit in the network device.

In a further implementation form of the fifth aspect, the obtaining the two or more neural network models may comprise the following steps:

> determining, by the network device, a signal strength based on the CSI;
> estimating, by the network device, a coverage area of the CSI based on the signal strength; and
> determining, by the network device, the two or more neural network models based on the estimated coverage area.

In a further implementation form of the fifth aspect, before determining the final estimation of the location of the terminal device, the method may comprise:

> identifying, by the network device, one or more isolated estimations that are isolated in the first coverage area; and
> discarding, by the network device, the one or more isolated estimations from the obtained set of estimations.

In a further implementation form of the fifth aspect, the determining the final estimation of the location of the terminal device may comprise the following steps:

> selecting, by the network device, a voting rule, the voting rule comprising a majority rule;
> applying, by the network device, the voting rule to select a cluster of estimations that has a highest ranking; and
> computing, by the network device, a mean value of estimations in the cluster as the final estimation of the location of the terminal device.

A sixth aspect of the present disclosure provides a computer program product comprising program code for performing the method according to the fourth aspect or any of its implementation forms, when executed on a processor or a chipset.

A seventh aspect of the present disclosure provides a computer program product comprising program code for performing the method according to the fifth aspect or any of its implementation forms, when executed on a processor or a chipset.

An eighth aspect of the present disclosure provides a computer comprising at least one memory and at least one processor, which are configured to store and execute program code to perform the method according to the fourth aspect or any implementation form thereof.

A ninth aspect of the present disclosure provides a computer comprising at least one memory and at least one processor, which are configured to store and execute program code to perform the method according to the fifth aspect or any implementation form thereof.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

BRIEF DESCRIPTION OF DRAWINGS

The above described aspects and implementation forms will be explained in the following description of specific embodiments in relation to the enclosed drawings, in which

FIG. 1      illustrates an application scenario for embodiments of the invention;

FIG. 2      illustrates a coverage area division according to an embodiment of the invention;

FIG. 3      illustrates another coverage area division according to an embodiment of the invention;

FIG. 4-6    illustrate an example of a coverage area division according to embodiments of the invention;

FIG. 7      shows a diagram of an online phase for performing a localization according to an embodiment of the invention;

FIG. 8      shows an example of post-processing of outputs of the two or more neural network models according to embodiments of the invention;

FIG. 9      shows an example of outputting a final estimation based on outputs of the two or more neural network models according to embodiments of the invention;

FIG. 10     shows a system according to embodiments of the invention;

FIG. 11     shows a method for supporting a network device in estimating a location of a terminal device in a wireless network according to an embodiment of the invention; and

FIG. 12     shows a method for estimating a location of a terminal device in a wireless network according to an embodiment of the invention.

DETAILED DESCRIPTION OF EMBODIMENTS

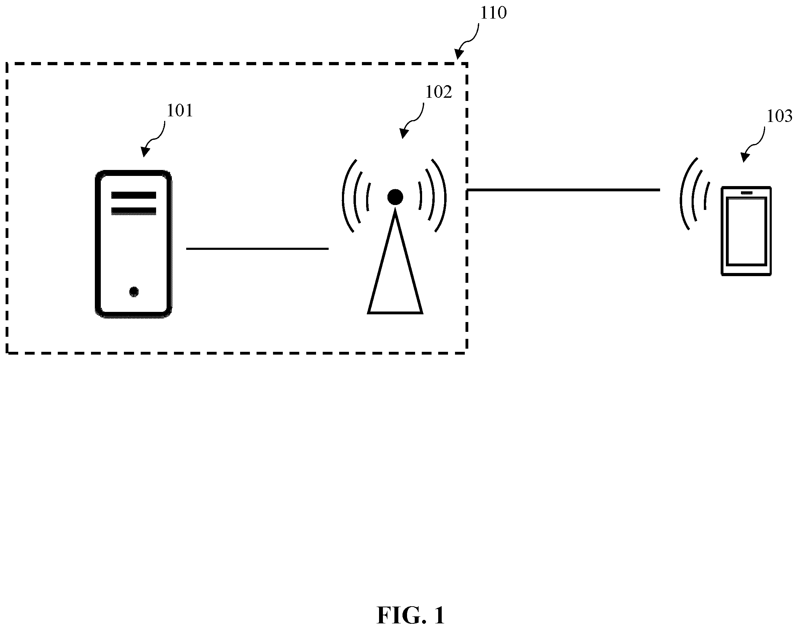

In FIG. 1 to 12, corresponding elements are labelled with the same reference signs, and share the same features, and functions likewise.

FIG. 1 illustrates an application scenario of the present disclosure, in particular, shows a computing device 101 for supporting a network device 102 in estimating a location of a terminal device 103 in a wireless network.

The computing device 101 and the network device 102 may form a system 110 for estimating the location of the terminal device 103 according to some embodiments of the invention.

In the present disclosure, estimating a location is referred to as localization, and may be understood as determining coordinates (here of the terminal device 103) in a physical space. The coordinates may be absolute coordinates in an absolute coordinate system (e.g., a Cartesian coordinate system, a polar coordinate, a geographic coordinate system etc.), or may be relative coordinates corresponding to a reference point.

Further, the computing device 101 may be a single electronic device capable of computing, or may comprise a set of connected electronic devices capable of computing with a shared system memory. It is well-known in the art that such computing capabilities may be incorporated into many different devices, and therefore the term "computing device" may comprise a PC, server, game console, graphic processing unit, graphic card, and the like.

Further, there may be different forms of the wireless network that may exploit CSI for localization. That is, the wireless network may be one of the following: a wireless local area network (WLAN), a cellular networks (also known as a mobile network), a radio network, an optical wireless communication network, and a visible light communication network. To this end, the network device 102 may be an access device that may transmit and receive electromagnetic signals within a certain spectrum. For example, the network device 102 may be a Wi-Fi access point, or a base station, or a radio tower. Connections between the computing device 101 and the network device 102 may be wireless or wire-based.

Alternatively, the network device 102 may be a positioning unit associated with an access point of the wireless network. That is, the network device 102 may be an internal or external unit of the access point. In this case, the terminal device 103 may send the CSI to a transceiver unit of the access point. Then, the access point may forward the CSI to the network device 102. Moreover, the coverage area of the access point may be understood as the coverage area of the network device 102 in this case.

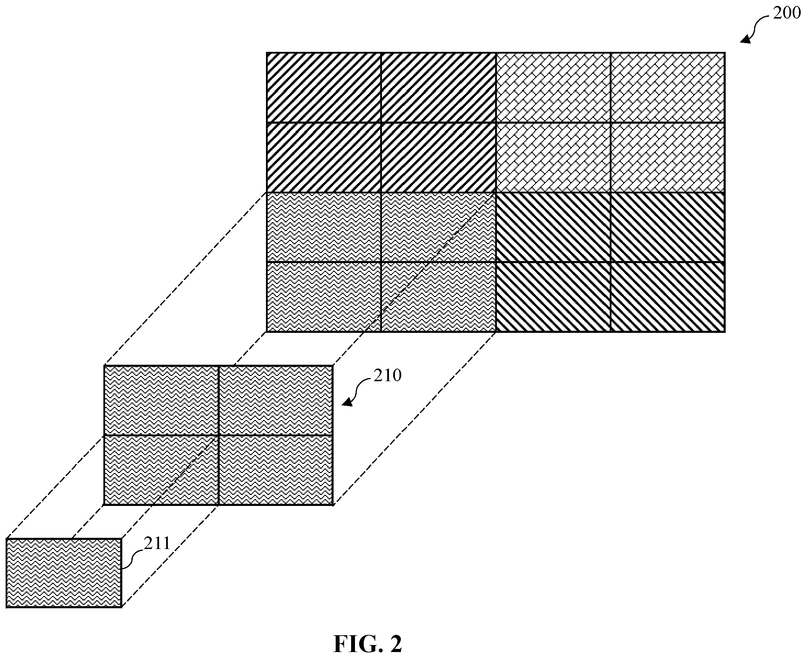

FIG. 2 illustrates a coverage area division according to an embodiment of the invention. In particular, a first coverage area 200 of the network device 102, a second coverage area 210, and a sub-area 211 are illustrated in FIG. 2. Just as an example in FIG. 2, four sub-areas 211 are illustrated in the second coverage area 210, and four second coverage areas 210 are illustrated in the first coverage area 200, each shown with four sub-areas 211.

The computing device 101 is configured to obtain one or more CSI datasets of the first coverage area 200. The one or more CSI datasets are labelled with location information, so that the one or more CSI datasets can be used as training data in the training phase.

In particular, each CSI dataset may comprise a set of CSI. In the field of wireless communications, CSI may represent one or more channel response properties of one or more radio links. The channel response properties may vary at different locations of the first coverage area. The set of CSI in each CSI dataset may be collected through a measurement campaign. In the measurement campaign, one or more channel measurements between a sampling device and the network device 102 may be performed at different locations in the first coverage area 200 of the network device 102.

Moreover, the location information associated with the one or more CSI datasets may be recorded by using a positioning module. The positioning module may be a component in the sampling device, or may be an external module attached to the sampling device. For example, the position module may be a unit running a GNSS. Alternatively, particularly when a GNSS service is not available, the positioning module may be a unit running a visual positioning system. For example, the visual positioning system may comprise at least one of a visual camera, a depth camera, and a light detection and ranging (LiDAR) unit. Alternatively, the position module may be an ultra-wide band unit that is configured to perform positioning. Alternatively, the location information may be manually logged during the measurement campaign.

The computing device 101 is further configured to determine a set of sub-areas in the first coverage area 200, in particular, to divide the first coverage area 200 into the set of sub-areas. Only for illustration purpose, the determined set of sub-areas is illustrated as 4×4 sub-areas 211 (blocks) in FIG. 2. Each block in FIG. 2 may be seen as a sub-area 211. For illustration purpose only, one such sub-area 211 is separately highlighted in FIG. 2. Each sub-area 211 may be understood as a basic unit for forming the second coverage area 210.

The computing device 101 is further configured to partition the one or more labelled CSI datasets based on the determined sub-areas 211, in order to obtain two or more CSI data partitions. Each CSI data partition corresponds to a second coverage area 210. As mentioned above, FIG. 2 illustrates four second coverage areas 210 that are marked with different patterns (shadings) in the first coverage area 200, which correspond to four CSI data partitions. A second coverage area 210 is separately highlighted in FIG. 2, for illustration purpose only. The second coverage area 210 in FIG.2 comprises four sub-areas 211 as mentioned above. Correspondingly, CSI data partition corresponding to the second coverage area 210 may comprise CSI labelled with location information that is extracted and partitioned from the one or more labelled CSI datasets based on the four sub-areas 211 of the second coverage area 210.

Further, the computing device 101 is configured to train one or more neural network models for each second coverage area 210 using the corresponding CSI data partition to obtain two or more trained neural network models.

Optionally, each data partition, the corresponding second coverage area 210 and the corresponding trained neural network model may be labelled by using a naming convention or an identity, so that the network device 102 may index the trained neural network models according to the second coverage areas 210.

This is beneficial, since the one or more CSI datasets corresponding to the first coverage area 200 is partitioned into the CSI data partitions. Each CSI data partition is then used as training data to train one or more neural networks respectively. This eases the training procedures of the neural network models, because computational resources required for the trainings may be controllable and predictable, and the size of training data for each neural network model may be reduced. The computational resources herein may be referred to as at least one of a memory resource, a storage resource, a power resource, and a processor resource. For example, the memory resource may be a clock frequency and a capacity of a random access memory (RAM), the storage resource may be a hard drive capacity and speed, the power resource may be a maximum power of a power supply, the processor resource may be at least one of capabilities of a central processing unit (CPU) and capabilities of a graphics processing unit (GPU). Further, a trained neural network in a second coverage area may be robust to environment changes in another second coverage area. Because, in case of the environment changes, only affected neural network models needs to be updated or re-built.

Notably, neural networks may be computational tools capable of machine learning. In neural networks, also known as artificial neural networks, interconnected computation units known as "neurons" may be configured to adapt to the training samples, and subsequently work together to produce predictions in a model. To this end, the terms "neural networks" and "neural network models" may be used interchangeably in the present disclosure. A neural network model may comprise a set of layers, the first one being an input layer configured to receive an input. The input layer comprises neurons that are connected to neurons comprised in a second layer, which may be referred to as a hidden layer. Neurons of the hidden layer may be connected to an output layer. Each neuron may comprise a set of parameters including at least one of weights and biases. In some neural networks, there may be more than one hidden layer.

Moreover, a purpose of the trainings is to adjust or fine-tune the parameters of the neural network models for performing the localization. That is, the trained neural network models in the present disclosure may be a set of parameters of a machine learning algorithm that is capable of estimating the location of the terminal device 103 in the wireless network.

Other aspects of the training of the neural network models are well-known in the art, and need not be described in greater detail herein.

In some embodiments, each sub-area 211 may be a circular shape, or an ellipsoid shape, or a polygon shape. The shape of each sub-area 211 may be determined based on requirements of the localization, characteristics of the wireless network, and the computational resources of the computing device 101.

In another embodiment, the computing device 101 may be further configured to provide the two or more trained neural network models to the network device 102. Alternatively or additionally, the computing device 101 may be comprised in the network device 102.

Optionally, the computing device 101 may be configured to provide the two or more trained neural network models upon request from the network device 102.

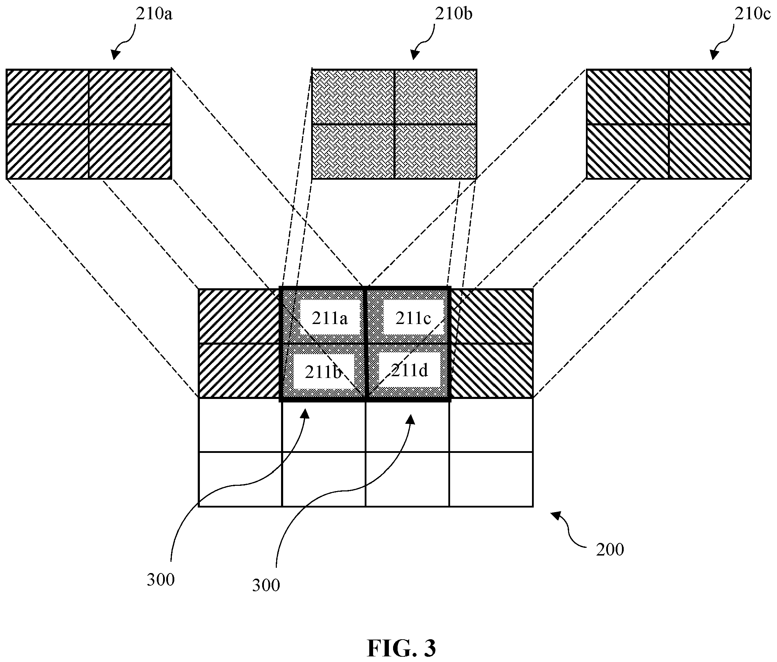

FIG. 3 illustrates another coverage area division according to an embodiment of the invention. The first coverage area 200 shown in FIG. 3 is based on the first coverage area 200 shown in FIG. 2, and therefore has the same features, and functions likewise. In this embodiment, two or more second coverage areas 210 may share an overlapping region 300. As exemplarily illustrated in FIG. 3, the adjacent second coverage areas 210a and 210b may share an overlapping region 300 including the sub-areas 211a and 211b, while the adjacent second coverages 210b and 210c share another overlapping region 300 including the sub-areas 211c and 211d.

In this way, there may be more than one trained neural network model for the overlapping region 300. This may be beneficial, since an accuracy of the localization may be enhanced for the overlapping regions 300 by using more than one neural network model.

Optionally, an overlapping region 300 may comprise a part of one sub-area 211, or one complete sub-area 211, or more than one sub-area 211. This may be determined by an overlapping factor. The computing device 101 may be configured to determine at least one overlapping factor, and to partition the one or more labelled data sets based further on the at least one overlapping factor. Each overlapping factor of the at least one overlapping factor may be used to indicate a proportion of a respective overlapped sub-area 211. The overlapping factor may be a value equal to or greater than zero, where zero means no overlapping at all. For example, the overlapping factors in FIG. 3 are set unanimously to a value of two. That is, each overlapping region 300 between two first coverage areas 210 consists of two sub-areas 211 (as described above).

Optionally, each overlapping factor may be individually determined by the computing device 101 based on channel conditions of the sub-areas 211 in the first coverage area 200. For example, if channel conditions in some part of the first coverage area 200 is relatively simple, then the computing device 101 may set an overlapping factor to 0.5, such that adjacent second coverage areas 210 overlap with each other by half size of a sub-area 211. Moreover, each overlapping factor may be individually determined according to available computational resources of the computing device 101.

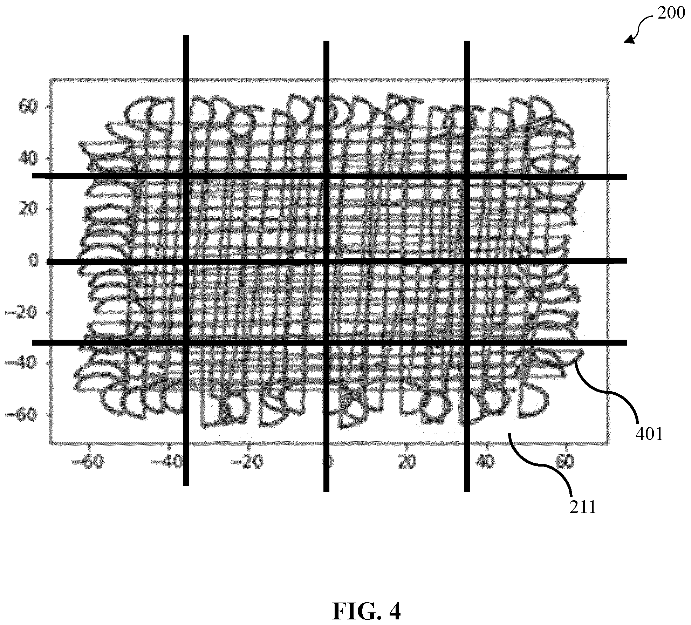

FIG. 4-6 illustrates an example of a coverage area division according to some embodiments of the invention. The first coverage area 200 in FIG. 4 is based on the first coverage area 200 in FIG. 2 or 3, and therefore has the same features and functions likewise. In this example, the first coverage area 200 may represent a rectangular space and is marked with a relative coordinate system by using the center of the rectangular space as an origin point (0,0). As shown in FIG. 4, the first coverage area 200 is approximately a square, and may have and exemplary side length of 120 meters. A set of trajectories 401 in the first coverage area 200 represents the one or more CSI datasets. Each dot in the set of trajectories may represent a piece of CSI. Coordinates of each dot, i.e. CSI, may be determined by the computing device 101 based on the location information. Then, the computing device 101 is configured to determine sub-areas 211 in the first coverage area 200, here exemplarily sixteen sub-areas 211 may be determined.

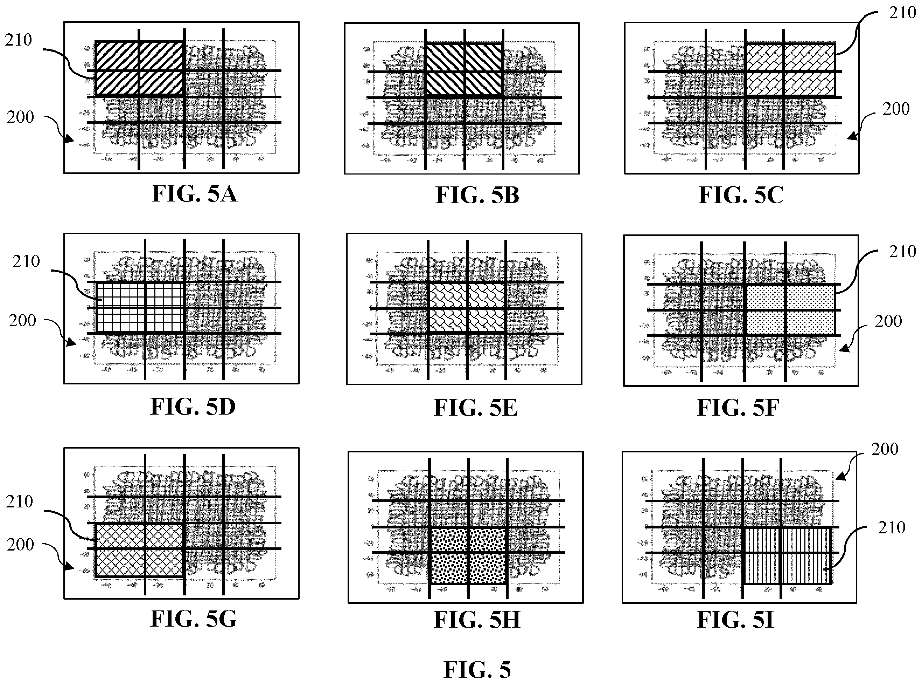

As shown in FIG. 5, the computing device 101 may partition the one or more CSI dataset into nine CSI data partitions based on the determined sub-areas 211 of FIG. 4 (the sixteen exemplary sub-areas 211), wherein each CSI data partition corresponds to a second coverage area 210, such as the second coverage areas 210 highlighted in FIG. 5. It can be derived from FIG. 5A-5I that every two adjacent second coverage areas 210 share an overlapping region 300 of exemplarily two sub-areas 211.

Then, the computing device 101 trains one or more neural network models for each of the second coverage areas 210 by using the corresponding CSI data partition as training samples.

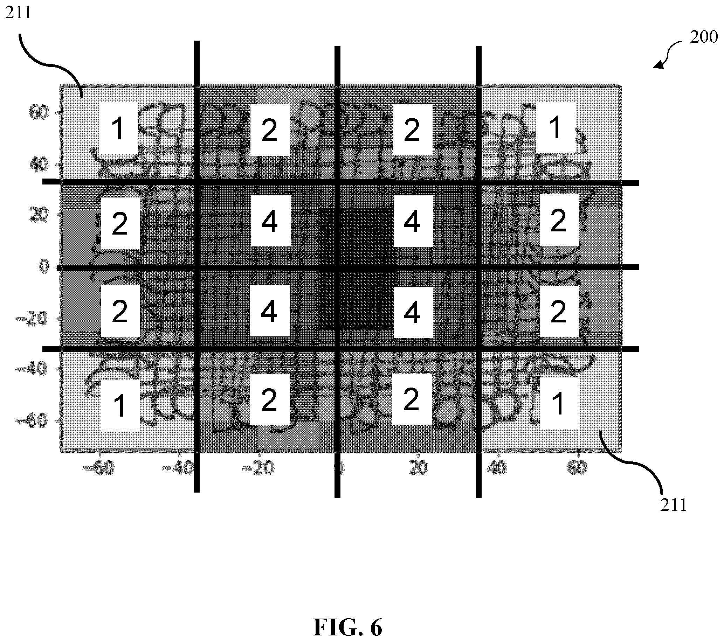

FIG. 6 shows an example of a first coverage area 200 labelled with a minimum quantity of neural network models covering each sub-area 211 according to some embodiments of the invention. Each numeral (1, 2 or 4) in each block (sub-area 11) shown in FIG. 6 represents a minimum quantity of trained neural network models for that sub-area 211 based on FIG. 5.

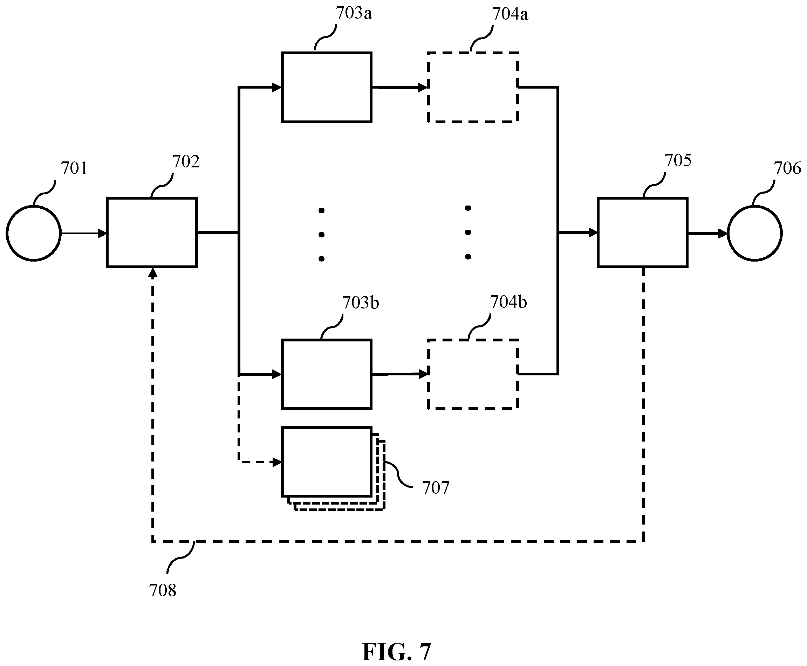

FIG. 7 shows a diagram of an online phase for performing a localization according to an embodiment of the invention.

In FIG. 7, the network device 102 is configured to obtain CSI 701 associated with the terminal device 103. Then, the network device 102 is configured to obtain two or more neural network models 703a, 703b (each being a neural network model 703) and to input the CSI 701 to each of the two or more neural network models 703a, 703b. Each of the two or more neural network models 703a, 703b is configured to output at least one estimation of the location of the terminal device 103. Then, an output unit 705 of the network device 102 is configured to determine a final estimation 706 of the location of the terminal device 103 based on the estimations of the two or more neural network models 703.

In particular, the two or more neural network models 703 may be obtained based on pre-processing through a pre-processor 702 of the network device 102. The pre-processing may be performed to dynamically load appropriate neural network models, e.g. the two or more neural network models 703a, 703b, based on at least one of statistical characteristics and geometric information of the CSI. Other neural network model(s) 707 may not be loaded.

Furthermore, the network device 102 may be configured to receive the two or more neural network models 703a, 703b from the computing device 101. Moreover, the network device 102 may determine an area of interest after the pre-processing on the CSI. Based on the area of interest, the network device 102 may request the two or more neural network models 703a, 703b that cover the area of interest from the computing device 101.

In some embodiments, the network device 102 may determine a signal strength based on the CSI, and estimate a coverage area of the CSI, i.e. the area of interest, based on the signal strength. Then, the network device 102 may determine the two or more neural network models 703a, 703b based on the estimated coverage area.

After obtaining the outputs of the two or more neural network models 703a, 703b, the network device 102 may optionally post-process the outputs in post-processors 704. In particular, the network device 102 may be configured to identify one or more isolated estimations that are isolated in the first coverage area. To this end, the network device 102 may set a range and determine an estimation as isolated if there is no other estimation that falls within said range. Then, the network device 102 may be configured to discard the one or more isolated estimations.

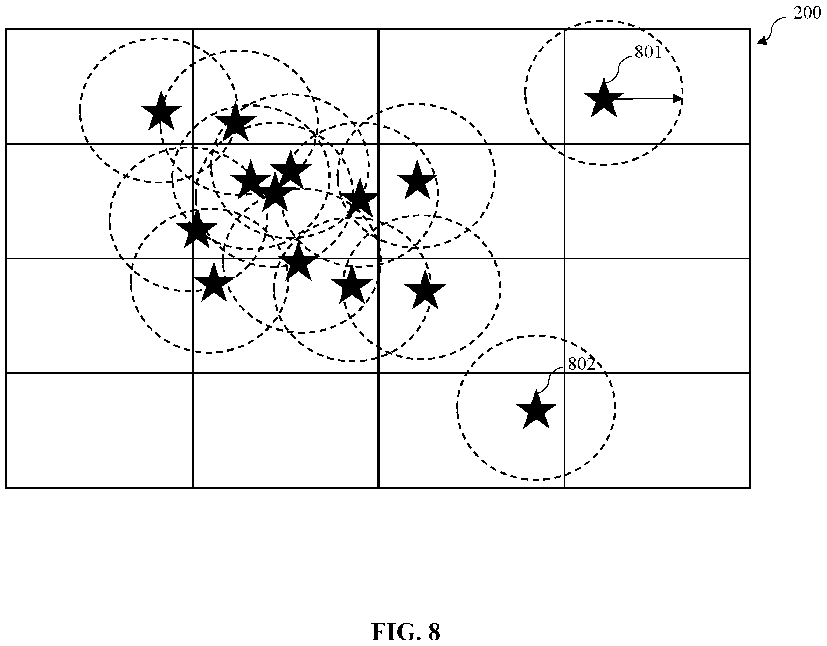

FIG. 8 shows an example of post-processing of outputs of the two or more neural network models 703a, 703b according to some embodiments of the invention.

The first coverage area 200 depicted in FIG. 8 is built based on that of FIG. 4. Each star shown in FIG. 8 in the first coverage area 200 represents an estimation. When the range is, for example, set to 10 meters, there may be two isolated estimations, e.g., the stars 801 and 802, among all the depicted estimations, because no other estimation exists in the range of 10 meters for the stars 801 and 802.

In this way, obvious erroneous estimations may be removed from the final estimation and the accuracy of the localization may be increased.

In some embodiments, for determining the final estimation of the location of the terminal device 103, the network device 102 may be configured to select a voting rule comprising a majority rule, and apply the voting rule to select a cluster of estimations that has a highest ranking. Finally, the network device 102 may be configured to compute a mean value of estimations in the cluster of estimations as the final estimation of the location of the terminal device 103.

In particular, the majority rule may be used to determine a number of the most reliable estimations. To this end, the network device 102 may compute a relative error of each estimation as follows:

$$r_i = \frac{\sum_{j=1}^{N-1} d_{ij}}{N-1}$$

$$(1)$$

in which $r_i$ denotes a relative error of estimation $i$, $d_{ij}$ denotes a distance from the estimation $i$ to another estimation $j$, $N$ is equal to the number of estimations for determining the final estimation, and $i$ and $j$ are both positive integers. Then, the network device 102 may select a certain number of estimations that have the lowest relative errors as the cluster of estimations having the highest ranking. Said certain number of estimations may be determined based on at least one of the distribution of the relative errors of the estimations and the accuracy of the localization.

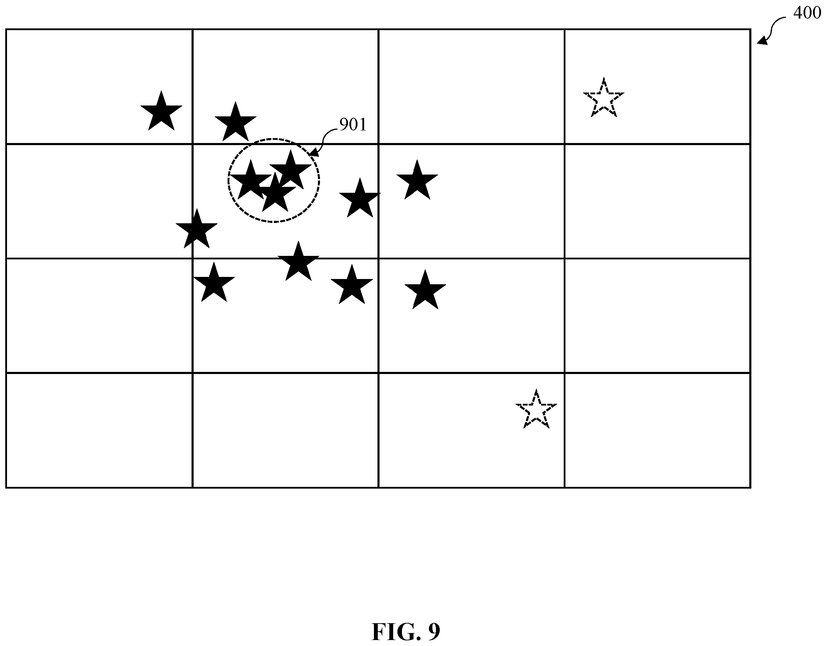

FIG. 9 shows an example of outputting a final estimation based on outputs of the two or more neural network models 703a, 703b according to some embodiments of the invention.

Elements in FIG. 9 are based on FIG. 8, while stars (or estimations) 801 and 802 have been discarded for determining the final estimation (shown white in FIG. 9, in contrast to the black stars representing estimations that have not been discarded). When the majority rule is applied, for example, the trusted range therein is set to be one meter, the computing device 101 may be configured to select the cluster of estimations 901 with the highest ranking as depicted in FIG. 9. Because the cluster of estimations 901 has the largest number of three in the trusted range of one meter. Then, the network device 102 may compute a mean value of the three estimation in the cluster of estimations 901 as the final estimation of the location of the terminal device.

Optionally, thresholds of the majority rule, i.e. the trusted range and a minimum number of estimation required for determining the final estimation of the location, may be determined further based on the number of overlapped sub-areas in each corresponding location.

Further, the network device 102 may provide feedback information 708 from the output unit 705 to the pre-processor 702 in order to increase the accuracy and to accelerate the speed in determining the appropriate neural network models.

Taking FIG. 8 as an example again, information about one or more neural network models that output estimations 801 and 802 may be fed back to the pre-processor 702. In this way, the pre-processor 702 may not activate those neural network models for similar CSI in the future.

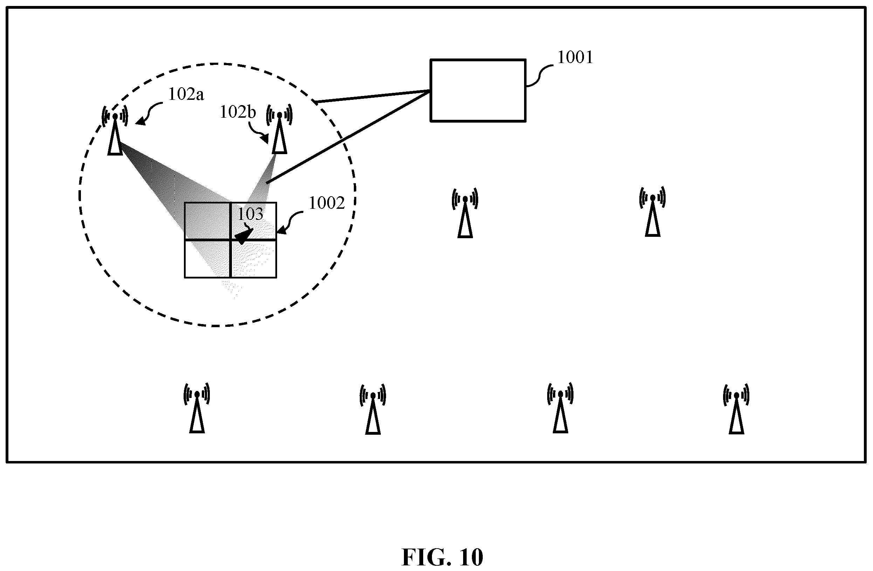

In some embodiments, the system 110 for performing the localization may comprise two or more network devices 102a, 102b, as illustrated in FIG. 10. The two network devices 102a, 102b and the terminal device 103 in FIG. 10 may firstly configured to perform a gross estimation 1001 based on at least one of signal information and geometrical information of CSI. In particular, time of arrival, time difference of arrival, direction of arrival may be extracted from the CSI of signals sent from the terminal device 103 to the network devices 102a, 102b. As a result, an area of interest 1002 may be obtained. Then, the system may determine an optimal network device 102a or 102b to perform approaches described in the embodiments as mentioned above.

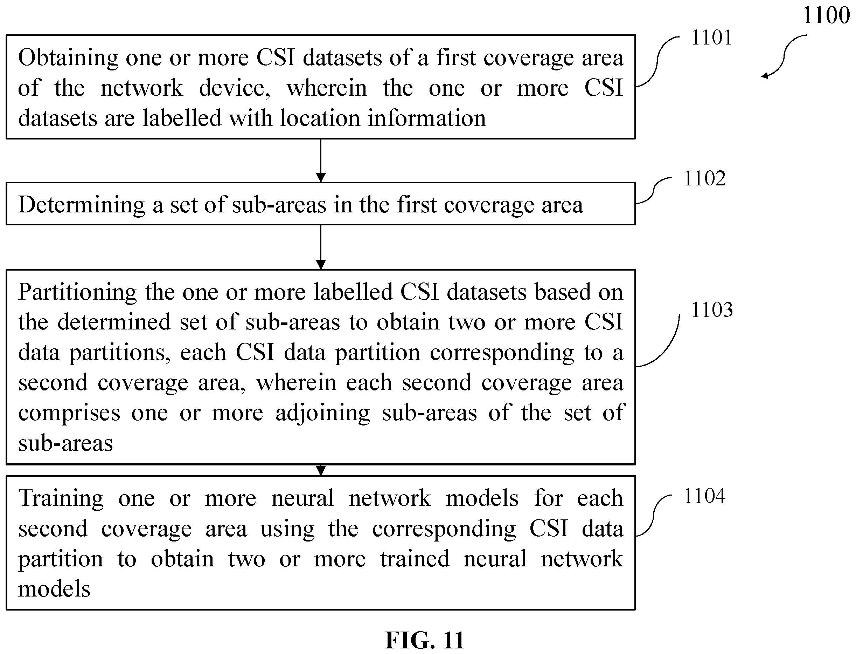

FIG. 11 shows a method 1100 for supporting a network device 102 in estimating a location of a terminal device 103 in a wireless network according to an embodiment of the invention.

The method 1100 is performed by the computing device 101 and comprises the following steps:

- step 1101: obtaining one or more CSI datasets of a first coverage area 200 of the network device 102, wherein the one or more CSI datasets are labelled with location information;
- step 1102: determining a set of sub-areas 211 in the first coverage area 200;
- step 1103: partitioning the one or more labelled CSI datasets based on the determined set of sub-areas 211 to obtain two or more CSI data partitions, each CSI data partition corresponding to a second coverage area 210, wherein each second coverage area 210 comprises one or more adjoining sub-areas 211 of the set of sub-areas 211; and
- step 1104: training one or more neural network models for each second coverage area 210 using the corresponding CSI data partition to obtain two or more trained neural network models.

It is noted that the steps of the method 1100 may share the same functions and details from the perspective of FIG. 1-6 described above. Therefore, the corresponding method implementations are not described again at this point.

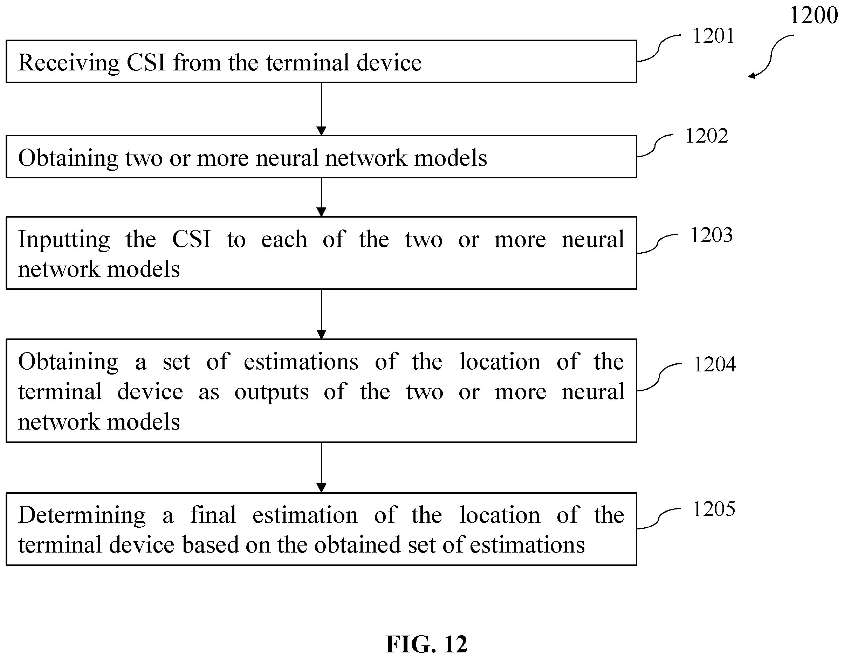

FIG. 12 shows a method 1200 for estimating a location of a terminal device 103 in a wireless network according to an embodiment of the invention.

The method 1200 is performed by a network device and comprises the following steps:

- step 1201: receiving CSI from the terminal device 103;
- step 1202: obtaining two or more neural network models;
- step 1203: inputting the CSI to each of the two or more neural network models;
- step 1204: obtaining a set of estimations of the location of the terminal device 103 as outputs of the two or more neural network models; and
- step 1205: determining a final estimation of the location of the terminal device 103 based on the obtained set of estimations.

It is noted that the steps of the method 1200 may share the same functions and details from the perspective of FIG. 7-9 described above. Therefore, the corresponding method implementations are not described again at this point.

While the disclosure has been shown and described with reference to various embodiments thereof, it will be understood by those skilled in the art that various changes in form and details may be made therein without departing from the scope of the disclosure as defined by the appended claims.

**Claims**

1. A network device (102) for estimating a location of a terminal device (103) in a wireless network, wherein the network device (102) is configured to:

receive channel state information, CSI, (701) associated with the terminal device (103);
obtain two or more neural network models (703a, 703b);
input the CSI (701) to each of the two or more neural network models (703a, 703b);
obtain a set of estimations of the location of the terminal device (103) as outputs of the two or more neural network models (703a, 703b); and

determine a final estimation (706) of the location of the terminal device (103) based on the obtained set of estimations,
wherein for obtaining the two or more neural network models (703a, 703b), the network device (102) is configured to:

determine a signal strength based on the CSI (701);
estimate a coverage area of the CSI (701) based on the signal strength; and
determine the two or more neural network models (703a, 703b) based on the estimated coverage area.

2. The network device (102) according to claim 1, wherein, for obtaining the two or more neural network models (703a, 703b), the network device (102) is configured to receive the two or more neural network models (703a, 703b) from a computing device (101).

3. The network device (102) according to claim 1 or 2, wherein, before determining the final estimation (706) of the location of the terminal device (103), the network device (102) is configured to:

identify one or more isolated estimations that are isolated among the obtained set of estimations; and
discard the one or more isolated estimations from the obtained set of estimations.

4. The network device (102) according to one of the claims 1 to 3, wherein, for determining the final estimation (706) of the location of the terminal device (103), the network device (102) is configured to:

select a voting rule;
apply the voting rule to select a cluster of estimations that has a highest ranking; and
compute a mean value of estimations in the cluster as the final estimation (706) of the location of the terminal device (103).

5. A method (1200) for estimating a location of a terminal device (103) in a wireless network, wherein the method (1200) comprises:

receiving (1201), by a network device (102), channel state information, CSI, from the terminal device (103);
obtaining (1202), by the network device (102), two or more neural network models (703a, 703b);
inputting (1203), by the network device (102), the CSI to each of the two or more neural network models (703a, 703b);
obtaining (1204), by the network device (102), a set of estimations of the location of the terminal device (103) as outputs of the two or more neural network models (703a, 703b); and
determining (1205), by the network device (102), a final estimation of the location of the terminal device (103) based on the obtained set of estimations,
wherein obtaining the two or more neural network models (703a, 703b) comprises:

determining, by the network device (102), a signal strength based on the CSI (701);
estimating, by the network device (102), a coverage area of the CSI (701) based on the signal strength; and
determining, by the network device (102), the two or more neural network models (703a, 703b) based on the estimated coverage area.

6. A computer program product comprising program code for performing, when implemented on a processor or a chipset, the method (1200) according to claim 5.

## Patentansprüche

1. Netzwerkvorrichtung (102) zum Schätzen eines Standorts einer Endgerätvorrichtung (103) in einem drahtlosen Netzwerk, wobei die Netzwerkvorrichtung (102) zu Folgendem konfiguriert ist:

Empfangen von Kanalzustandsinformationen (channel state information, CSI) (701), die mit der Endgerätvorrichtung (103) assoziiert sind;
Erlangen von zwei oder mehr neuronalen Netzwerkmodellen (703a, 703b);
Eingeben der CSI (701) in jedes der zwei oder mehr neuronalen Netzwerkmodelle (703a, 703b);

Erlangen eines Satzes von Schätzungen des Standorts der Endgerätvorrichtung (103) als Ausgaben der zwei oder mehr neuronalen Netzwerkmodelle (703a, 703b); und

Bestimmen einer endgültigen Schätzung (706) des Standorts der Endgerätvorrichtung (103) basierend auf dem erlangten Satz von Schätzungen,

wobei zum Erlangen der zwei oder mehr neuronalen Netzwerkmodelle (703a, 703b) die Netzwerkvorrichtung (102) zu Folgendem konfiguriert ist:

Bestimmen einer Signalstärke basierend auf den CSI (701);
Schätzen eines Abdeckungsbereichs der CSI (701) basierend auf der Signalstärke; und
Bestimmen der zwei oder mehr neuronalen Netzwerkmodelle (703a, 703b) basierend auf dem geschätzten Abdeckungsbereich.

2. Netzwerkvorrichtung (102) gemäß Anspruch 1, wobei zum Erlangen der zwei oder mehr neuronalen Netzwerkmodelle (703a, 703b) die Netzwerkvorrichtung (102) konfiguriert ist, um die zwei oder mehr neuronalen Netzwerkmodelle (703a, 703b) aus einer Computervorrichtung (101) zu empfangen.

3. Netzwerkvorrichtung (102) gemäß Anspruch 1 oder 2, wobei vor Bestimmen der endgültigen Schätzung (706) des Standorts der Endgerätvorrichtung (103) die Netzwerkvorrichtung (102) zu Folgendem konfiguriert ist:

Identifizieren einer oder mehreren isolierten Schätzungen, die aus dem erlangten Satz von Schätzungen isoliert sind; und
Verwerfen der einen oder mehreren isolierten Schätzungen aus dem erlangten Satz von Schätzungen.

4. Netzwerkvorrichtung (102) gemäß einem der Ansprüche 1 bis 3, wobei zum Bestimmen der endgültigen Schätzung (706) des Standorts der Endgerätvorrichtung (103) die Netzwerkvorrichtung (102) zu Folgendem konfiguriert ist:

Auswählen einer Abstimmungsregel;
Anwenden der Abstimmungsregel, um ein Cluster von Schätzungen auszuwählen, das den höchsten Rang aufweist; und
Berechnen eines Mittelwerts der Schätzungen in dem Cluster als endgültige Schätzung (706) des Standorts der Endgerätvorrichtung (103).

5. Verfahren (1200) zum Schätzen eines Standorts einer Endgerätvorrichtung (103) in einem drahtlosen Netzwerk, wobei das Verfahren (1200) Folgendes umfasst:

Empfangen (1201) von Kanalzustandsinformationen, CSI, aus der Endgerätvorrichtung (103) durch eine Netzwerkvorrichtung (102);
Erlangen (1202) von zwei oder mehreren neuronalen Netzwerkmodellen (703a, 703b) durch die Netzwerkvorrichtung (102) ;
Eingeben (1203) der CSI durch die Netzwerkvorrichtung (102) in jedes der zwei oder mehr neuronalen Netzwerkmodelle (703a, 703b);
Erlangen (1204) eines Satzes von Schätzungen des Standorts der Endgerätvorrichtung (103) als Ausgaben der zwei oder mehr neuronalen Netzwerkmodelle (703a, 703b) durch die Netzwerkvorrichtung (102); und
Bestimmen (1205) einer endgültigen Schätzung des Standorts der Endgerätvorrichtung (103) durch die Netzwerkvorrichtung (102) basierend auf dem erlangten Satz von Schätzungen,
wobei Erlangen der zwei oder mehr neuronalen Netzwerkmodelle (703a, 703b) Folgendes umfasst:

Bestimmen einer Signalstärke basierend auf den CSI (701) durch die Netzwerkvorrichtung (102);
Schätzen eines Abdeckungsbereichs der CSI (701) durch die Netzwerkvorrichtung (102) basierend auf der Signalstärke; und
Bestimmen der zwei oder mehr neuronalen Netzwerkmodelle (703a, 703b) durch die Netzwerkvorrichtung (102) basierend auf dem geschätzten Abdeckungsbereich.

6. Computerprogrammprodukt, umfassend Programmcode zum Durchführen des Verfahrens (1200) gemäß Anspruch 5 bei Implementierung auf einem Prozessor oder einem Chipsatz.

**Revendications**

1. Dispositif réseau (102) permettant d'estimer un emplacement d'un dispositif terminal (103) dans un réseau sans fil, dans lequel le dispositif réseau (102) est configuré pour :

   recevoir des informations d'état de canal, CSI, (701) associées au dispositif terminal (103) ;
   obtenir deux modèles de réseau neuronal (703a, 703b) ou plus ;
   saisir les CSI (701) dans chacun des deux modèles de réseau neuronal (703a, 703b) ou plus ;
   obtenir un ensemble d'estimations de l'emplacement du dispositif terminal (103) en tant que résultats des deux modèles de réseau neuronal (703a, 703b) ou plus ; et
   déterminer une estimation finale (706) de l'emplacement du dispositif terminal (103) sur la base de l'ensemble obtenu d'estimations,
   dans lequel pour obtenir les deux modèles de réseau neuronal (703a, 703b) ou plus, le dispositif réseau (102) est configuré pour :

       déterminer une puissance de signal sur la base des CSI (701) ;
       estimer une zone de couverture des CSI (701) sur la base de la puissance de signal ; et
       déterminer les deux modèles de réseau neuronal (703a, 703b) ou plus sur la base de la zone de couverture estimée.

2. Dispositif réseau (102) selon la revendication 1, dans lequel, pour obtenir les deux modèles de réseau neuronal (703a, 703b) ou plus, le dispositif réseau (102) est configuré pour recevoir les deux modèles de réseau neuronal (703a, 703b) ou plus à partir d'un dispositif informatique (101).

3. Dispositif réseau (102) selon la revendication 1 ou 2, dans lequel, avant de déterminer l'estimation finale (706) de l'emplacement du dispositif terminal (103), le dispositif réseau (102) est configuré pour :
   identifier une ou plusieurs estimations isolées qui sont isolées parmi l'ensemble obtenu d'estimations ; et éliminer les une ou plusieurs estimations isolées à partir de l'ensemble obtenu d'estimations.

4. Dispositif réseau (102) selon l'une des revendications 1 à 3, dans lequel, pour déterminer l'estimation finale (706) de l'emplacement du dispositif terminal (103), le dispositif réseau (102) est configuré pour :

   sélectionner une règle de vote ;
   appliquer la règle de vote pour sélectionner un groupe d'estimations qui présente le classement le plus élevé ; et
   calculer une valeur moyenne des estimations dans le groupe en tant qu'estimation finale (706) de l'emplacement du dispositif terminal (103).

5. Procédé (1200) permettant d'estimer un emplacement d'un dispositif terminal (103) dans un réseau sans fil, dans lequel le procédé (1200) comprend :

   la réception (1201), par un dispositif réseau (102), d'informations d'état de canal, CSI, à partir du dispositif terminal (103) ;
   l'obtention (1202), par le dispositif réseau (102), de deux modèles de réseau neuronal (703a, 703b) ou plus ;
   la saisie (1203), par le dispositif réseau (102), des CSI dans chacun des deux modèles de réseau neuronal (703a, 703b) ou plus ;
   l'obtention (1204), par le dispositif réseau (102), d'un ensemble d'estimations de l'emplacement du dispositif terminal (103) en tant que résultats des deux modèles de réseau neuronal (703a, 703b) ou plus ; et
   la détermination (1205), par le dispositif réseau (102), d'une estimation finale de l'emplacement du dispositif terminal (103) sur la base de l'ensemble obtenu d'estimations,
   dans lequel l'obtention des deux modèles de réseau neuronal (703a, 703b) ou plus comprend :

       la détermination, par le dispositif réseau (102), d'une puissance de signal sur la base des CSI (701) ;
       l'estimation, par le dispositif réseau (102), d'une zone de couverture des CSI (701) sur la base de la puissance du signal ; et la détermination, par le dispositif réseau (102), des deux modèles de réseau neuronal (703a, 703b) ou plus sur la base de la zone de couverture estimée.

6. Produit de programme informatique comprenant un code de programme pour réaliser, lorsqu'il est mis en œuvre sur un processeur ou un jeu de puces, le procédé (1200) selon la revendication 5.

**FIG. 1**

EP 4 205 318 B1

FIG. 2

**FIG. 3**

**FIG. 4**

**FIG. 5A**

**FIG. 5B**

**FIG. 5C**

**FIG. 5D**

**FIG. 5E**

**FIG. 5F**

**FIG. 5G**

**FIG. 5H**

**FIG. 5I**

**FIG. 5**

EP 4 205 318 B1

FIG. 6

**FIG. 7**

EP 4 205 318 B1

FIG. 8

EP 4 205 318 B1

**FIG. 9**

EP 4 205 318 B1

FIG. 10

Obtaining one or more CSI datasets of a first coverage area of the network device, wherein the one or more CSI datasets are labelled with location information — 1101

Determining a set of sub-areas in the first coverage area — 1102

Partitioning the one or more labelled CSI datasets based on the determined set of sub-areas to obtain two or more CSI data partitions, each CSI data partition corresponding to a second coverage area, wherein each second coverage area comprises one or more adjoining sub-areas of the set of sub-areas — 1103

Training one or more neural network models for each second coverage area using the corresponding CSI data partition to obtain two or more trained neural network models — 1104

1100

**FIG. 11**

EP 4 205 318 B1

Receiving CSI from the terminal device — 1201

Obtaining two or more neural network models — 1202

Inputting the CSI to each of the two or more neural network models — 1203

Obtaining a set of estimations of the location of the terminal device as outputs of the two or more neural network models — 1204

Determining a final estimation of the location of the terminal device based on the obtained set of estimations — 1205

1200

**FIG. 12**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3108706 A1

- CN 109640269 A

**Non-patent literature cited in the description**

- **WU GUAN-SIAN et al.** *A Deep Neural Network-Based Indoor Positioning Method using Channel State Information*, 05 March 2018